# EUROPEAN PATENT SPECIFICATION

(11) **EP 4 467 955 B1**
(45) Date of publication and mention of the grant of the patent: **26.11.2025**
(21) Application number: 23175677.6
(22) Date of filing: 26.05.2023
(51) Int. Cl.: G01M 5/00

(54) **METHOD FOR MANUFACTURING A SPECIMEN FOR MECHANICAL LOAD TESTING AS WELL AS SPECIMEN**
VERFAHREN ZUR HERSTELLUNG EINER PROBE ZUR MECHANISCHEN BELASTUNGSPRÜFUNG SOWIE PROBE
PROCÉDÉ DE FABRICATION D'UN ÉCHANTILLON POUR TESTER UNE CHARGE MÉCANIQUE ET ÉCHANTILLON

(43) Date of publication of application: 27.11.2024
(73) Proprietor: Nordex Blade Technology Centre ApS, 5771 Stenstrup (DK)
(72) Inventor: Sørensen, Flemming, 5771 Stenstrup (DK); Hornemann, Jesper, 5771 Stenstrup (DK)
(74) Representative: Völkl Siebenson Patentanwälte - Partnerschaft mbB

(56) References cited:
- WO-A1-2021/239535
- ASHWILL: "SAND2003-0719 Unlimited Release Printed May 2003 Blade Manufacturing Improvements Remote Blade Manufacturing Demonstration", 30 May 2003 (2003-05-30), pages 1 - 47, XP055822661, Retrieved from the Internet <URL:https://windpower.sandia.gov/other/030719.pdf> [retrieved on 20210708]

## Description

The invention refers to a method for manufacturing a specimen for a mechanical load testing, in particular for a wind turbine rotor blade. The invention also refers to a specimen.

Wind turbines having rotor blades are widely known from the prior art and are used to convert wind energy into electrical energy. In the region of a rotor blade root, the rotor blades typically comprise a rotor blade attachment region with a plurality of inserts integrated into the laminate. The inserts are typically metal bushings through which the rotor blades are connected via fastening (screw) bolts to a bearing ring of a so-called pitch bearing or to a component connected to the bearing ring such as e.g. an extender of the wind turbine. The inserts can be part of a prefabricated flange insert for the rotor blade attachment. Such a structure is known, for example, from the international application WO 2015/124568 A1.

Alternatively, such inserts are also used for the connection of rotor blade segments which, when arranged and assembled lengthwise, form a rotor blade. The inserts, e.g. metal bushings, are then located in the laminate of a respective division flange of the rotor blade segments. The rotor blade segments are connected to one another in that the inserts are coupled by means of bolts or by way of suitable intermediate pieces screwed to the inserts.

The above-described connections are subject to quite extensive stress, and therefore such assemblies must be thoroughly tested to make sure that the joints are able to handle the stress. All parts of the connections are usually tested mechanically for quasi-static and fatigue cases using specimens. The mechanical tests are conventionally performed by subjecting the specimen to axial loadings, while measuring response to increasing loads as well as repeated cyclic loads.

Ashwill ("SAND2003-0719 Unlimited Release Printed May 2003 Blade Manufacturing Improvements Remote Blade Manufacturing Demonstration",30 May 2003 (2003-05-30), pages 1-47, XP055822661, Retrieved from the Internet: URL:https://windpower.sandia.gov/other/030719.pdf [retrieved on 2021-07-08]) discloses specimens for testing, each with a stud at both ends. The specimens were manufactured in sheets containing four specimens each, which were later cut and prepared for testing.

It is an object of the present disclosure to provide a method for manufacturing a specimen and to provide a specimen, which allow realistic or close-to-reality mechanical testing.

The object is solved by the method according to the independent claim. Advantageous embodiments are given in the sub-claims.

A method is disclosed for manufacturing a specimen for a mechanical load testing. The method comprises the following steps:
- providing a laminate structure, wherein
   -- the laminate structure comprises at least three pairs of inserts embedded into laminate layers,
   -- the laminate structure has a first laminate end and a second laminate end being opposite to the first laminate end,
   -- the laminate structure extends along a main extension direction from the first laminate end to the second laminate end,
   -- each pair of inserts extends along a longitudinal axis from the first laminate end to the second laminate end,
   -- the pairs of inserts are arranged adjacent to each other and parallel to each other, and
   -- the pairs of inserts comprising a middle pair of inserts and two adjacent pairs of inserts each arranged on one side of the middle pair of inserts,
- resin infusion of the laminate structure,
- curing the laminate structure,
- cutting the cured laminate structure at both sides of the middle pair along a respective cutting plane, and
- removing the adjacent pairs of inserts, and thus producing at least one specimen comprising the middle pair of inserts.

The method makes it possible to produce at least one (test) specimen particularly efficiently for mechanical load testing, which specimen corresponds particularly realistically to the later, actual installation situation in a wind turbine rotor blade. The specimen is manufactured in the same composite of materials and with the same manufacturing methods as it is done in the series production of the rotor blade. The resulting specimen extends along the respective longitudinal axis and comprises a first specimen end and a second specimen end being opposite to the first specimen end. The specimen comprises a first metal bushing and a second metal bushing, both the first and second metal bushing extending along the longitudinal axis. The specimen comprises a laminate surrounding the first and the second metal bushing. An outer end of the first metal bushing is associated with the first specimen end and an outer end of the second metal bushing is associated with the second specimen end.

For receiving the at least one specimen, the laminate structure comprising the at least three pairs of inserts is cut into at least three pieces, namely at both sides of the middle pair of inserts. After the step of cutting, the adjacent pairs of inserts and - if necessary - further components related to the adjacent pair of inserts, are removed and the specimen remains. The gained specimen comprises the two metal bushings of the middle pair of inserts, wherein the metal bushings are not surrounded purely circularly by cured laminate, but portions of laminate from the adjacent removed insert pairs and/or material from spacers located between the respective pairs of inserts are still partially present (the portions having surrounded the inserts before their removal).

By means of such a specimen, particularly good test results in mechanical tests are obtained.

The surrounding laminate means that the metal bushings are at least partially wrapped into laminate. In other words, a free bushing end of each metal bushing can be freely accessible.

Each metal bushing of the specimen comprises an outer end and an opposite inner end. The inner ends of the metal bushings point to each other, for example. At their inner ends, each metal bushing comprises a bushing runout (short: runout). Thus, the runouts of the metal bushings point to each other. A runout is a recess in the metal bushing extending in a longitudinal direction of the bushing towards the inner end, wherein an inner diameter of the recess increases along the longitudinal direction towards the outside, **i.e.** the inner end, wherein a wall thickness of the metal bushing decreases.

The cutting is done along cutting planes at both sides of the middle pair of inserts, which cutting planes run parallel to the main extension direction and in a certain distance from the middle pair of inserts.

At least three pairs of inserts means that the laminate structure can also have more than three pairs of inserts, however, there must always be an odd number. For example, the laminate structure has five, seven, nine or more pairs of inserts. Such structure having more than three pairs of inserts consequently comprises more than one middle pair of metal bushings. In this context, a middle pair means a pair of metal bushings (or more generally metal inserts) being arranged next to further pairs of inserts at both sides. An odd number is necessary because one middle pair of inserts and two adjacent pairs of inserts are required to produce one test specimen. For example, if the laminate structure initially has five pairs of inserts, such laminate structure comprises two middle pairs of inserts (i.e. the second and the fourth pair of inserts) and thus two specimens can be produced. More generally, the number of test specimens that can be produced is based on the following formula: (3 + 2*n) - (2+n), wherein (3 + 2*n) defines the number of pairs of inserts included in the laminate structure prior to cutting.

In the step of cutting, the cutting plane can run in a distance of or through the adjacent pairs of inserts. Preferably, the inserts themselves are not cut. That means, the cut goes only through the surrounding laminate resp. material without destroying the inserts. Optionally the adjacent inserts may be, at least partially, cut. However, in the step of removing, the entire adjacent pairs of inserts are removed.

Preferably, the inserts adjacent to the inserts of the middle pair may similarly be metal bushings, which contributes to a very realistic test scenario. Alternatively, other materials are possible for these inserts, in particular since the inserts adjacent to the middle pair can be seen as "dummy" inserts to be removed after cutting.

The specimen may optionally comprise a core element. The core element extends along the longitudinal axis between the metal bushings. The core element is arranged partially within the first metal bushing with a first end of the core element. The core element is arranged partially within the second metal bushing with a second end of the core element. The core element typically is made of a polymer foam material. This contributes to a very realistic test scenario.

According to an embodiment, each cutting plane runs vertically with respect to the laminate structure. In other words, each cutting plane is perpendicular to a plane (also: horizontal plane) spanned by the longitudinal axes of the middle pair of inserts and a respective adjacent pair of inserts. In other words, a cutting plane runs along the main extension direction and normal to the cured laminate structure.

According to an embodiment, each cutting plane runs between the longitudinal axis of the middle pair and the respective longitudinal axes of the adjacent pairs of inserts. More precisely, each cutting plane runs between a respective outer side of the middle pair of inserts and the respective longitudinal axis of the adjacent pair of inserts, wherein the outer side is defined by the outermost point of the metal inserts facing the respective adjacent pair of inserts.

According to the invention, each cutting plane runs through the respective adjacent pair of inserts. Preferably, the inserts themselves are not cut. That means, the cut goes only through the surrounding laminate resp. material without destroying the inserts. This contributes to the above mentioned functions and advantages, and, in particular, facilitates the removal of the adjacent inserts. The removed inserts can be cleaned and used again for manufacturing another laminate structure.

According to an embodiment, a respective cutting plane runs at a certain distance from the middle pair of inserts, **e.g.** from the outer side of the inserts. For example, the respective cutting plane runs vertically at a distance starting from the outer side, the distance being 20%, 30%, 40%, 50%, 60% or 70% of the total distance from the outside to the respective longitudinal axis of the adjacent pair of inserts.

According to an embodiment, one or more spacer elements are arranged between two adjacent pairs of inserts, in particular between adjacent inserts of adjacent insert pairs.

According to an embodiment, a cutting plane runs through the one or more spacer elements. This is particularly advantageous, because the received specimen includes not even the surrounding laminate, but also other components / materials embedded in the laminate and thus represents the real environment of the insert in the rotor blade even better.

According to an embodiment, the inserts of the adjacent pairs of inserts are covered or coated with release agent and/or wrapped into one or more layers of peel ply. Alternatively, the inserts of the adjacent pairs of inserts are wrapped into a separating foil. This ensures an easy removal of the respective inserts after cutting the laminate structure.

According to an embodiment, the inserts of all pairs of inserts are metal bushings. As already described above, metal bushings are used as connecting elements at a root region or at a segmentation region of rotor blades. According to the invention, the specimen is manufactured under the same conditions as the rotor blade connection area. Therefore, in all pairs of inserts the same metal bushings are used as embedded in the rotor blade laminate.

Further, a specimen is disclosed being manufactured according to any of the above embodiments of a method as described above.

The specimen enables the above-mentioned functions and advantages. The above-described embodiments and the corresponding description of features analogously apply.

As stated above, the at least one specimen is useful for mechanical load testing in order to provide optimized mechanical connections for a wind turbine rotor blade. For example, in a typical test rig, a load is applied to the specimen by applying tension forces on the first metal bushing and the second metal bushing, e.g. via screw bolts screwed into the first and second metal bushings.

A typical method for mechanical load testing is disclosed, wherein a specimen manufactured according to any one of the above-described embodiments is provided. The specimen extends along a longitudinal axis and comprises a first specimen end and a second specimen end. The specimen comprises a first metal bushing and a second metal bushing, both the first and second metal bushing extending along the longitudinal axis. The specimen comprises a laminate surrounding the first and the second metal bushing. An outer end of the first metal bushing is associated with the first specimen end and an outer end of the second metal bushing is associated with the second specimen end. The method comprises the following steps:
- securing a first connection part of a test rig to the first specimen end by means of a screw connection with the first metal bushing,
- securing a second connection part of the test rig to the second specimen end by means of a screw connection with the second metal bushing, and
- applying a load to the specimen by applying a tension force between the first connection part and the second connection part.

The method enables the above-mentioned functions and advantages. The above-described embodiments and the corresponding description of features analogously apply.

Further advantages, features and further developments are set out by the following exemplary embodiments which are explained in conjunction with the figures. The same or similar elements or elements acting in the same way are provided with the same reference numerals in the figures, wherein:
Fig. 1 shows a schematic representation of a wind turbine according to one embodiment example,
Fig. 2 shows a schematic representation of a wind turbine rotor blade,
Fig. 3 shows a schematic representation of a flange insert for the rotor blade,
Fig. 4a, b schematically shows a specimen as manufactured according to an embodiment of the invention, and
Fig. 5 to 8 refer to the manufacture of a specimen for mechanical load testing according to an embodiment of the invention, and

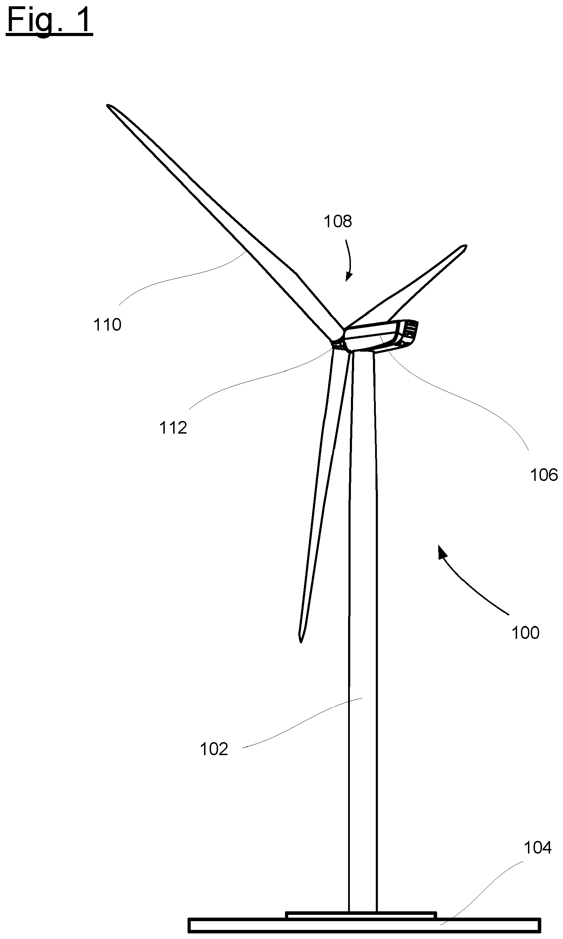

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the kinetic energy of the rotor 108 into electrical energy.

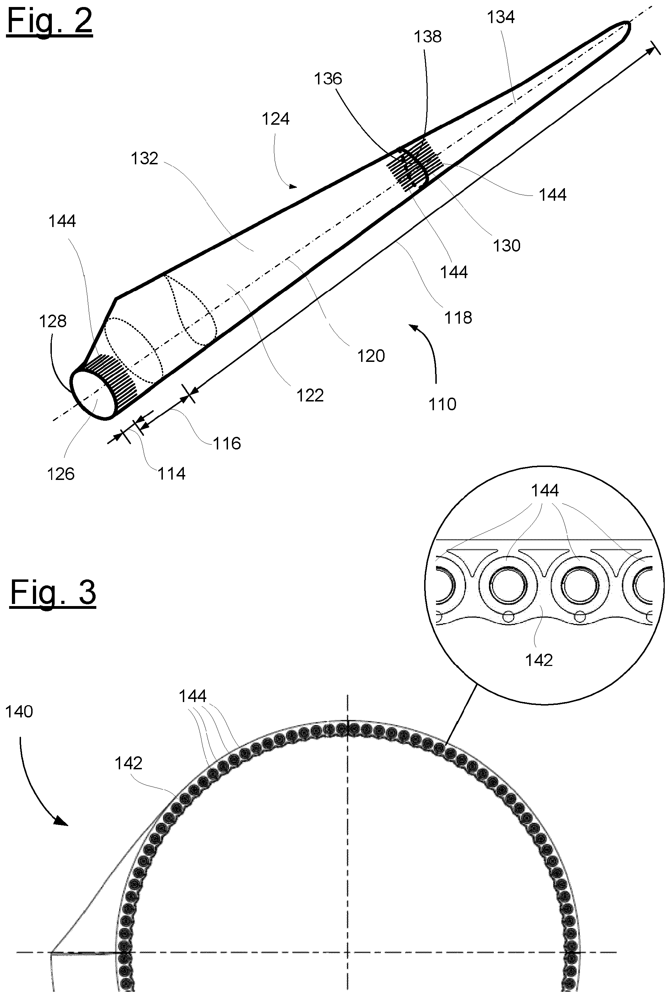

Figure 2 shows an exemplary wind turbine rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of rotor blade 110. The rotor blade 110 has a pressure side 122 and an opposite suction side 124 with respect to a longitudinal extension direction 120 (also main extension direction). The rotor blade 110 is essentially hollow inside.

In the rotor blade root area 114 a rotor blade connection end 126 with a flange connection 128 is provided, by means of which the rotor blade 110 is mechanically connected to a pitch bearing or an extender.

The rotor blade 110 comprises a division area 130 where a blade root-side rotor blade segment 132 and a blade tip-side rotor blade segment 134 are connected to each other. For this purpose, the segments 132, 134 each comprise a segment connection area 136, 138 (also connection ends). The rotor blade 110 is thus a split or segmented rotor blade.

Typically, a flange insert 140 is provided in order to manufacture the flange connection 128 at the rotor blade connection end 126. Said flange insert 140 comprises an arc-shaped laminate 142 (e.g. an inner laminate and an outer laminate), in which a multitude of inserts, i.e. metal bushings 144 and typically being threaded, are embedded, extending in the longitudinal extension direction 120. The metal bushings 144 are in particular steel bushings. A semicircular segment is shown in Fig. 3, also showing an enlarged detail cut-out.

In a typical manufacturing process, initially, the flange insert 140 is produced as a half-product or intermediate product, wherein the metal bushings 144 are arranged in a circle at fixed distances adjacent to one another. Distance spacing elements are optionally used to ensure the space between two adjacent metal bushings 144. The laminate 142 as well as the metal bushings 144 are subsequently sealed in an air-tight manner and infused with a matrix material, for instance epoxy resin. In a later step, the flange insert 140 is inserted, for example, into a main mold in order to produce the final rotor blade 110, i.e. the rotor blade (half-)shell and connected to further laminate layers.

However, it is also conceivable that no flange insert 140 is provided and the metal bushings 144 are embedded directly in the laminate of the rotor blade 110, for instance in rotor blade half-shells.

Analogously, the two rotor blade segments 132 and 134 are connected by way of such metal bushings 144 with or without flange inserts.

As mentioned in the introductory part of this writing, the described mechanical connections with the metal bushings 144 are subjected to various tests, in particular mechanical tests, wherein in the following the focus is on the production of a specimen.

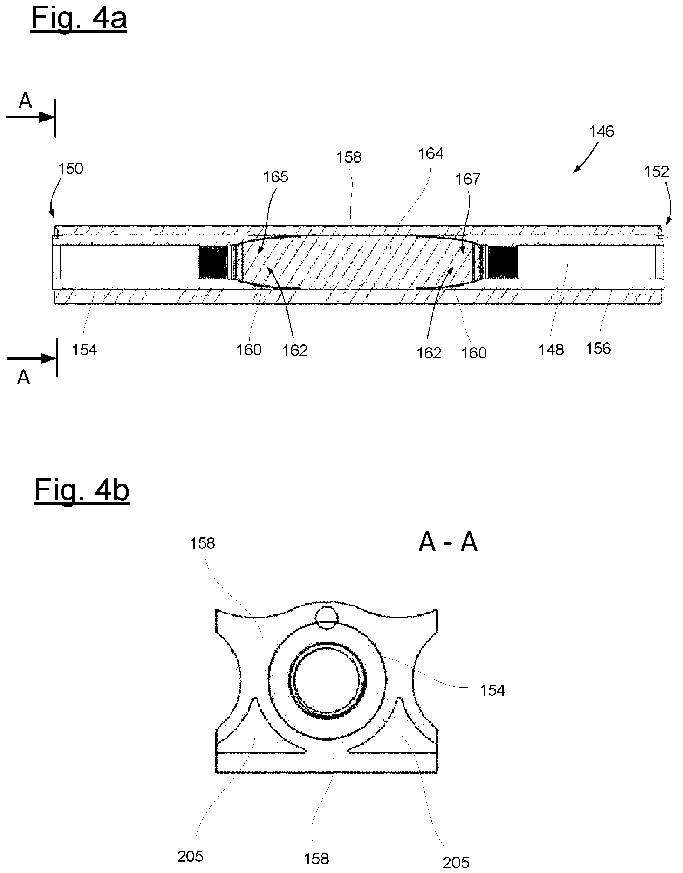

Fig. 4a shows a schematic cross section of a specimen 146. The specimen 146 extends along a longitudinal axis 148, which can also be referred to as middle axis. The specimen 146 has a first specimen end 150 and an opposite second specimen end 152. The specimen 146 comprises a first metal bushing 154 and a second metal bushing 156, which extend along and are arranged along the longitudinal axis 148. The metal bushings 154 and 156 point to each other. A laminate 158, e.g. several laminate layers being resin infused and cured, surround both metal bushings 154 and 156. The bushings 154, 156 have a cylindrical outer contour. Inside the specimen 146, the metal bushings 154, 156 each comprise a bushing run-out 160. Each bushing run-out 160 has a recess 162. Between the two bushings 154, 156 a core element 164 is arranged. The core element 164 is made of foam material, for example, and is at least partially inserted into the recesses 162 of both metal bushings 154, 156 with a first core element end 165 and second core element end 167. This means, the core element 164 is arranged with the first core element end 165 and the second core element end 167 within the respective bushing runouts 160.

Fig. 4b shows a schematic cross section of the specimen 146 shown in Fig. 4a according to view A-A. The first metal bushing 154 of the specimen 146 is surrounded by a cured laminate 158 comprising laminate layers and resin. On both sides of the metal bushing 154 core material spacer 205 are embedded into the laminate.

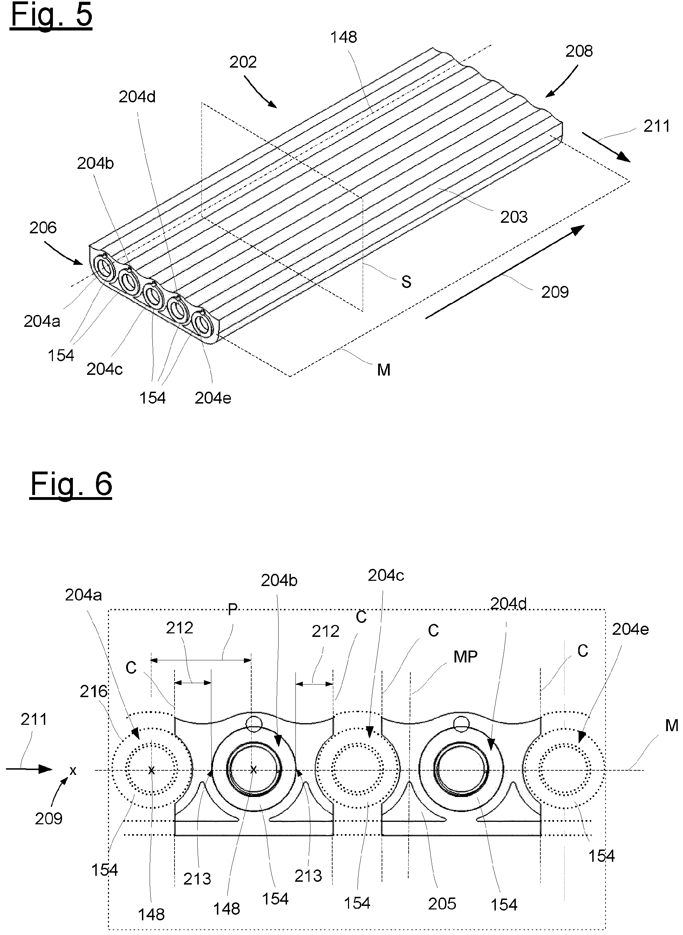

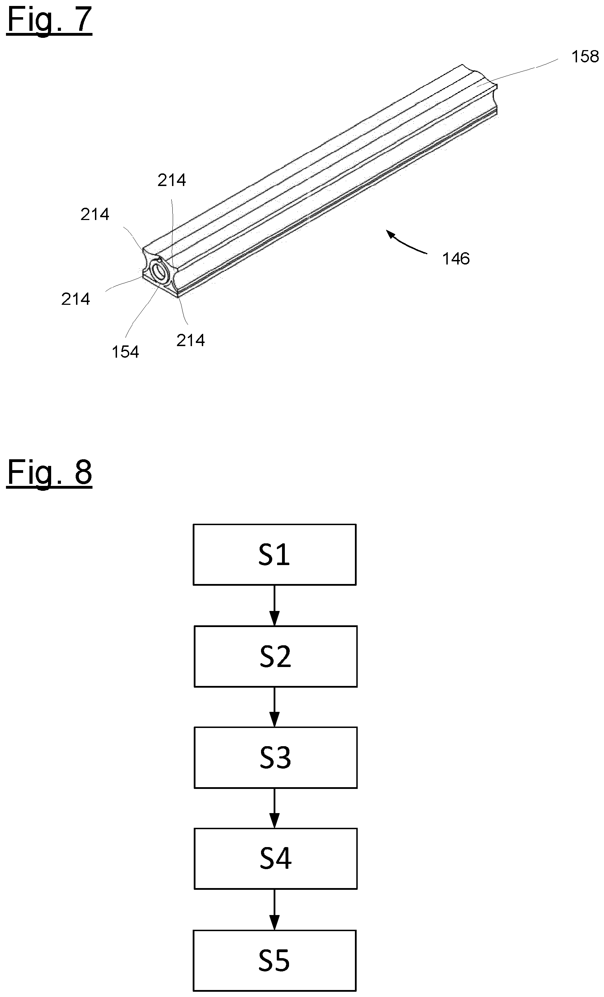

Figures 5 to 8 refer to a manufacture of one or more specimens 146 as described above, wherein Fig. 8 shows a schematic flowchart of a method for manufacturing.

In a first step S1, a laminate structure 202 is provided. In the shown embodiment of Fig. 5, the laminate structure 202 comprises five pairs 204a to 204e of inserts, wherein the inserts are metal bushings 154, 156 as described above.

Please note that in Fig. 5 only ends of one insert of each pair 204a to 204e are shown. However, a pair 204a to 204e corresponds to the two metal bushings 154, 156 as shown in Fig. 4, which define a pair of inserts. The pairs 204a to 204e of metal bushings are embedded into one or more laminate layers 203. Figure 6 shows a cross-sectional view of the laminate structure 202 along sectional plane S as illustrated in Fig. 5.

The laminate structure 202 has a first laminate end 206 and an opposite second laminate end 208. The laminate structure 202 extends along a main extension direction 209 from the first laminate end 206 to the second laminate end 208. Each pair of metal bushings 204a to 204e extends along a respective longitudinal axis 148 (only shown for pair 204a of inserts) from the first laminate end 206 to the second laminate end 208, i.e. parallel to the main extension direction 209. The pairs 204a to 204e of metal bushings are arranged adjacent to each other and parallel to each other, in particular with respect to two adjacent respective longitudinal axes 148. Between the adjacent pairs 204a to 204e optional core material spacers 205 are inserted (see Fig. 6). The second pair 204b and the fourth pair 204d of inserts are defined as middle pairs of inserts, since these middle pairs have neighboring pairs 204a and 204c or 204c and 204e respectively at both sides with respect to a traverse direction 211, which runs perpendicular to the main extension direction 209, e.g. trough all pairs 204a to 204e of inserts. Both the main extension direction 209 and the traverse direction 211 span a main extension plane M.

In a second step S2, resin infusion of the laminate structure 202 takes place.

In a third step S3, the laminate structure 202 is cured. Thus, the laminate layers 203 are cured to form a cured laminate 158. The cured laminate structure 202 is a stable, rigid structure having fixedly embedded therein the pairs 204a to 204e of inserts.

In a fourth step S4, the cured laminate structure 202 is cut into five pieces along cutting planes C, which are detailed as follows with the help of Figure 6, which shows a view of the laminate structure 202 seen from the first laminate end 206.

The cutting planes C run parallel to the main extension direction 209 of the laminate structure 202 or parallel to a respective longitudinal axis 148 of each of the pairs 204a to 204e. Each cutting plane C runs vertically with respect to the laminate structure 202. This means that each cutting plane C runs normal with respect to the main extension plane M. As an alternative definition, each cutting plane C runs orthogonal to a plane P spanned by the longitudinal axes 148 of a middle pair 204b, 204d of inserts and a respective adjacent pair 204a, 204c, 204e of inserts. Further, each cutting plane C runs between a middle pair 204b, 204d and the respective longitudinal axes 148 of the respective adjacent pairs 204a, 204c, 204e of inserts, wherein each cutting plane C intersects the laminate structure 202 in a region close to the respective metal bushings 154, 156 of the adjacent pairs 204a, 204c, 204e at a distance 212 from the metal bushings of the middle pairs 204b and 204d. More precisely, each cutting plane C runs in a distance 212 from a respective outer side 213 of the middle pair 204b, 204d of inserts. The outer side 213 is defined by the outermost point of the metal inserts 154, 156 of the respective middle pair 204b, 204d facing the respective adjacent pair 204a, 204c, 204e of inserts, wherein the outermost point is located in the respective plane P. Thus, the respective metal bushings 154, 156 of the adjacent pairs 204a, 204c, 204e are cut.

Most preferably, a cutting plane C intersects a respective plane P between the respective longitudinal axis 148 of an adjacent pair 204a, 204c, 204e and a middle plane MP, the middle plane MP running between to longitudinal axis 148 of adjacent pairs 204a to 204e of inserts.

After the step of cutting, in a further step S5 the metal bushings 154, 156 (or portions thereof) of the pairs 204a, 204c and 204e (pairs adjacent to the middle pairs 204b, 204d) are removed. The result of step S5 is also indicated in Fig. 6 (see dotted line of removed parts of the laminate structure 202). The laminate structure 202 now is cut into five single pieces with three pairs 204a, 204c, 204e of metal bushings 154, 156 being removed. Thus, two specimens 146 are provided, one of which is also shown in Fig. 7. Each test specimen 146 remains with the metal bushings 154, 156 of the middle pairs 204b and 204d. In particular, due to the cutting along the cutting planes C as described above, the removal of the respective inserts 154, 156 is facilitated.

In these two specimens 146 the metal bushings are not surrounded purely circularly by laminate. Additionally, portions of laminate from the adjacent removed pairs 204a, 204c and 204e and material from the spacers 205 located between the metal bushings are still present (the portions having surrounded the inserts before their removal). Each manufactured specimen 146 has overhangs 214, which are portions of the laminate 158 that originally surrounded the adjacent inserts 154, 156 being removed in step S4.

Optionally, the metal bushings of the pairs 204a, 204c and 204e, **i.e.** the first, third and fifth pair, are covered with a release agent or wrapped into a layer of peel ply 216. This facilitates the removal of the inserts 210 of the adjacent pairs 204a, 204c, 204e.

It is noted that the shown bushings 154, 156 can have other or different designs. Further, the laminate 158 or the laminate structure 202 respectively can be designed differently. Essentially, a test specimen is manufactured with the adjacent bushings removed so that some laminate that surrounded the adjacent bushings is not removed and is part of the manufactured test specimen.

### Reference signs

- 100: wind turbine
- 102: tower
- 104: foundation
- 106: nacelle
- 108: rotor
- 110: rotor blade
- 112: rotor hub
- 114: rotor blade root area
- 116: transition area
- 118: profile area
- 120: longitudinal direction
- 122: pressure side
- 124: suction side
- 126: rotor blade connection end
- 128: flange connection
- 130: division area
- 132: first rotor blade segment
- 134: second rotor blade segment
- 136: first connection end
- 138: second connection end
- 140: flange insert
- 142: laminate
- 144: metal bushing
- 146: specimen
- 148: longitudinal axis
- 150: first specimen end
- 152: second specimen end
- 154: first metal bushing
- 156: second metal bushing
- 158: laminate
- 160: run-out
- 162: recess
- 164: core element
- 165: first core element end
- 166: test assembly
- 167: second core element end
- 202: laminate structure
- 203: laminate layer
- 204a-e: pairs of metal bushings
- 205: core material spacer
- 206: first laminate end
- 208: second laminate end
- 209: main extension direction
- 211: traverse direction
- 212: distance
- 213: outer side
- 214: overhangs
- 216: peel ply
- A-A: cross section
- C: cutting plane
- M: main extension plane
- MP: middle plane
- P: plane
- S: sectional plane
- S1 to S...: step

## Claims

1. Method for manufacturing a specimen (146) for a mechanical load testing, the method comprising the following steps:
- providing a laminate structure (202), wherein
**--** the laminate structure (202) comprises at least three pairs (204a - 204e) of inserts embedded into laminate layers (203),
-- the laminate structure (202) has a first laminate end (206) and a second laminate end (208) being opposite to the first laminate end (206),
-- the laminate structure (202) extends along a main extension direction (209) from the first laminate end (206) to the second laminate end (208),
**--** each pair (204a - 204e) of inserts extends along a longitudinal axis (148) from the first laminate end (206) to the second laminate end (208),
**--** the pairs (204a - 204e) of inserts are arranged adjacent to each other and parallel to each other, and
**--** the pairs (204a - 204e) of inserts comprising a middle pair (204b, 204d) of inserts and two adjacent pairs (204a, 204c, 204e) of inserts each arranged on one side of the middle pair (204b, 204d) of inserts
- resin infusion of the laminate structure (202),
- curing the laminate structure (202),
- cutting the cured laminate structure (202) at both sides of the middle pair (204b, 204d) of inserts along a respective cutting plane (C), wherein each cutting plane (C) runs through the respective adjacent pairs (204a, 204c, 204e) of inserts, and
- removing the adjacent pairs (204a, 204c, 204e) of inserts, and thus producing at least one specimen (146) comprising the middle pair (204b, 204d) of inserts.

2. Method according to claim 1, wherein each cutting plane (C) runs vertically along the main direction with respect to the laminate structure (202).

3. Method according to claim 1 or 2, wherein each cutting plane (C) runs between the longitudinal axis (148) of the middle pair (204b, 204d) and the respective longitudinal axes (148) of the adjacent pairs (204a, 204c, 204e) of inserts.

4. Method according to any one of the preceding claims, wherein the respective cutting plane (C) runs at a certain distance (212) from the longitudinal axis (148) of the middle pair (204b, 204d) of inserts.

5. Method according to any one of the preceding claims, wherein one or more spacer elements (205) are arranged between two adjacent pairs (204a - 204e) of inserts.

6. Method according to claim 5, wherein the respective cutting plane (C) runs through the one or more spacer elements (205).

7. Method according to any one of the preceding claims, wherein the inserts of the adjacent pairs (204a, 204c, 204e) of inserts are covered or coated with release agent and/or wrapped into one or more layers of peel ply (216).

8. Method according to any one of the preceding claims, wherein, the inserts of the adjacent pairs (204a, 204c, 204e) of inserts are wrapped into a separating foil.

9. Method according to any one of the preceding claims, wherein the inserts of all pairs (204a - 204e) are metal bushings (154, 156).

10. Specimen (146) for a mechanical load testing for a wind turbine rotor blade (110), the specimen manufactured according to a method according to any one of the preceding claims.

## Patentansprüche

1. Verfahren zur Herstellung eines Prüfkörpers (146) für eine mechanische Belastungsprüfung, wobei das Verfahren die folgenden Schritte umfasst:
- Bereitstellen einer Laminatstruktur (202), wobei
-- die Laminatstruktur (202) mindestens drei Paare (204a - 204e) von Inserts umfasst, die in Laminatschichten (203) eingebettet sind,
-- die Laminatstruktur (202) ein erstes Laminatende (206) und ein zweites Laminatende (208) aufweist, das dem ersten Laminatende (206) gegenüberliegt,
-- sich die Laminatstruktur (202) entlang einer Haupterstreckungsrichtung (209) vom ersten Laminatende (206) zum zweiten Laminatende (208) erstreckt,
-- jedes Paar (204a - 204e) von Inserts sich entlang einer Längsachse (148) vom ersten Laminatende (206) zum zweiten Laminatende (208) erstreckt,
-- die Paare (204a - 204e) von Inserts benachbart zueinander und parallel zueinander angeordnet sind, und
-- die Paare (204a - 204e) von Inserts, die ein mittleres Paar (204b, 204d) von Inserts und zwei benachbarte Paare (204a, 204c, 204e) von Inserts umfassen, die jeweils auf einer Seite des mittleren Paares (204b, 204d) von Inserts angeordnet sind
- Harzinfusion der Laminatstruktur (202),
- Aushärten der Laminatstruktur (202),
- Schneiden der ausgehärteten Laminatstruktur (202) auf beiden Seiten des mittleren Paares (204b, 204d) von Inserts entlang einer jeweiligen Schnittebene (C), wobei jede Schnittebene (C) durch die jeweiligen benachbarten Paare (204a, 204c, 204e) von Inserts verläuft, und
- Entfernen der benachbarten Paare (204a, 204c, 204e) von Inserts, wodurch mindestens eine Probekörper (146) erzeugt wird, der das mittlere Paar (204b, 204d) von Inserts umfasst.

2. Verfahren nach Anspruch 1, wobei jede Schnittebene (C) vertikal entlang der Hauptrichtung in Bezug auf die Laminatstruktur (202) verläuft.

3. Verfahren nach Anspruch 1 oder 2, wobei jede Schnittebene (C) zwischen der Längsachse (148) des mittleren Paares (204b, 204d) und den jeweiligen Längsachsen (148) der benachbarten Paare (204a, 204c, 204e) von Inserts verläuft.

4. Verfahren nach einem der vorstehenden Ansprüche, wobei die jeweilige Schnittebene (C) in einem bestimmten Abstand (212) von der Längsachse (148) des mittleren Paares (204b, 204d) von Inserts verläuft.

5. Verfahren nach einem der vorstehenden Ansprüche, wobei ein oder mehrere Abstandselemente (205) zwischen zwei benachbarten Paaren (204a - 204e) von Inserts angeordnet sind.

6. Verfahren nach Anspruch 5, wobei die jeweilige Schnittebene (C) durch das eine oder die mehreren Abstandselemente (205) verläuft.

7. Verfahren nach einem der vorstehenden Ansprüche, wobei die Inserts der benachbarten Paare (204a, 204c, 204e) von Inserts mit Trennmittel bedeckt oder beschichtet und/oder in eine oder mehrere Lagen Abziehgewebe (216) eingewickelt sind.

8. Verfahren nach einem der vorstehenden Ansprüche, wobei die Inserts der benachbarten Paare (204a, 204c, 204e) von Inserts in eine Trennfolie eingewickelt sind.

9. Verfahren nach einem der vorstehenden Ansprüche, wobei die Inserts aller Paare (204a - 204e) Metallhülsen (154, 156) sind.

10. Prüfkörper (146) für eine mechanische Belastungsprüfung für ein Windturbinenrotorblatt (110), wobei der Prüfkörper gemäß einem Verfahren nach einem der vorstehenden Ansprüche hergestellt ist.

## Revendications

1. Procédé de fabrication d'un échantillon (146) destiné à un essai de charge mécanique, le procédé comprenant les étapes suivantes :
- fournir une structure stratifiée (202), dans laquelle
-- la structure stratifiée (202) comprend au moins trois paires (204a - 204e) d'inserts intégrés dans des couches stratifiées (203),
-- la structure stratifiée (202) comporte une première extrémité stratifiée (206) et une deuxième extrémité stratifiée (208) opposée à la première extrémité stratifiée (206),
-- la structure stratifiée (202) s'étend le long d'une direction d'extension principale (209) depuis la première extrémité stratifiée (206) jusqu'à la deuxième extrémité stratifiée (208),
-- chaque paire (204a - 204e) d'inserts s'étend le long d'un axe longitudinal (148) depuis la première extrémité stratifiée (206) jusqu'à la deuxième extrémité stratifiée (208),
-- les paires (204a - 204e) d'inserts sont disposées de manière adjacente les unes aux autres et parallèles les unes aux autres, et
-- les paires (204a - 204e) d'inserts comprenant une paire centrale (204b, 204d) d'inserts et deux paires adjacentes (204a, 204c, 204e) d'inserts disposées chacune d'un côté de la paire centrale (204b, 204d) d'inserts
- infusion de résine dans la structure stratifiée (202),
- durcissement de la structure stratifiée (202),
- découpe de la structure stratifiée durcie (202) des deux côtés de la paire centrale (204b, 204d) d'inserts le long d'un plan de découpe respectif (C), chaque plan de découpe (C) traversant les paires adjacentes respectives (204a, 204c, 204e) d'inserts, et
- retirer les paires adjacentes (204a, 204c, 204e) d'inserts, et produire ainsi au moins un échantillon (146) comprenant la paire centrale (204b, 204d) d'inserts.

2. Procédé selon la revendication 1, dans lequel chaque plan de coupe (C) s'étend verticalement le long de la direction principale par rapport à la structure stratifiée (202).

3. Procédé selon la revendication 1 ou 2, dans lequel chaque plan de coupe (C) s'étend entre l'axe longitudinal (148) de la paire centrale (204b, 204d) et les axes longitudinaux respectifs (148) des paires adjacentes (204a, 204c, 204e) d'inserts.

4. Procédé selon l'une quelconque des revendications précédentes, dans lequel le plan de coupe respectif (C) s'étend à une certaine distance (212) de l'axe longitudinal (148) de la paire centrale (204b, 204d) d'inserts.

5. Procédé selon l'une quelconque des revendications précédentes, dans lequel un ou plusieurs éléments d'espacement (205) sont disposés entre deux paires adjacentes (204a - 204e) d'inserts.

6. Procédé selon la revendication 5, dans lequel le plan de coupe respectif (C) s'étend à travers le ou les éléments d'espacement (205).

7. Procédé selon l'une quelconque des revendications précédentes, dans lequel les inserts des paires adjacentes (204a, 204c, 204e) d'inserts sont recouverts ou enduits d'un agent de démoulage et/ou enveloppés dans une ou plusieurs couches de tissu pelable (216).

8. Procédé selon l'une quelconque des revendications précédentes, dans lequel les inserts des paires adjacentes (204a, 204c, 204e) d'inserts sont enveloppés dans une feuille de séparation.

9. Procédé selon l'une quelconque des revendications précédentes, dans lequel les inserts de toutes les paires (204a à 204e) sont des douilles métalliques (154, 156).

10. Échantillon (146) destiné à un essai de charge mécanique pour une pale de rotor d'éolienne (110), l'échantillon étant fabriqué selon un procédé selon l'une quelconque des revendications précédentes.
